# EUROPÄISCHE PATENTSCHRIFT

(11) **EP 2 823 563 B1**
(45) Veröffentlichungstag und Bekanntmachung des Hinweises auf die Patenterteilung: **20.09.2017**
(21) Anmeldenummer: 13709368.8
(22) Anmeldetag: 05.03.2013
(51) Int. Cl.: H02P 29/02, B60T 8/40

(54) **VERFAHREN UND SCHALTUNGSANORDNUNG ZUR BEGRENZUNG VON SPITZENSTRÖMEN SOWIE STEIGUNG DER STROMFLANKEN**
METHOD AND CIRCUIT ARRANGEMENT FOR LIMITING PEAK CURRENTS AND PITCH OF CURRENT FLANKS
PROCÉDÉ ET CIRCUITERIE POUR LIMITER DES COURANTS DE POINTE AINSI QUE LA PENTE DES FLANCS DU COURANT ÉLECTRIQUE

(30) Priorität: 07.03.2012 DE 102012203558; 06.08.2012 DE 102012213874
(43) Veröffentlichungstag der Anmeldung: 14.01.2015
(73) Patentinhaber: Continental Teves AG&Co. Ohg, 60488 Frankfurt (DE)
(72) Erfinder: HEINZ, Micha, 64289 Darmstadt (DE); MICHEL, Frank, 61191 Rosbach v. d. Höhe (DE)
(86) Internationale Anmeldenummer: PCT/EP2013/054385
(87) Internationale Veröffentlichungsnummer: WO 2013/131905

(56) Entgegenhaltungen:
- EP-A2- 1 040 975
- DE-A1- 10 246 382
- DE-A1-102006 006 149

## Beschreibung

Die vorliegende Erfindung betrifft ein Verfahren zur Begrenzung von Spitzenströmen sowie der maximalen Steigung der Stromflanken gemäß Oberbegriff von Anspruch 1 sowie eine Schaltungsanordnung gemäß Oberbegriff von Anspruch 15.

Um Fehlfunktionen der zunehmenden Anzahl elektronischer Komponenten oder der Spannungsversorgung im Fahrzeug und damit verbundene Sicherheits- oder Komforteinschränkungen für die Fahrzeuginsassen zu verhindern, steigen die Anforderungen an elektrische Komponenten, die Leistungsentnahme aus dem Fahrzeugbordnetz in definierten Grenzen zu halten. Dies gilt besonders für Elektromotoren einer Kraftfahrzeugbremsanlage, deren hohe Anlaufströme zu einer starken Belastung des gesamten Fahrzeugbordnetzes und zu zeitweisem Absinken der Versorgungsspannung führen können. Dies kann sich wiederum auf die Funktionalität anderer Fahrzeugkomponenten auswirken und damit die Sicherheit und den Komfort für die Fahrzeuginsassen einschränken.

In der DE 10 2006 006 149 A1 wird hierzu ein Verfahren zum Ansteuern einer Verdrängermaschine einer Bremsanlage beschrieben, bei welchem zur Vermeidung von Stromspitzen beim Anlauf des PWM-angesteuerten Antriebs der Verdrängermaschine ein Sonderanlaufverfahren vorgesehen ist. Dazu wird in der Anlauf- oder Primärphase eine höhere PWM-Frequenz verwendet als in der so genannten Sekundärphase, nach Anlauf des Antriebs. Da die Stromspitzen in einem sehr kleinen Zeitbereich stattfinden, wird durch die höhere PWM-Frequenz der Primärphase eine verbesserte Nachführung des Tastgrades erreicht, wodurch eine Verringerung dieser Stromspitzen erzielt wird. Weiterhin wird der Tastgrad innerhalb der Primärphase stufenweise in vorgegebenen Schritten bis auf den Maximalwert der kontinuierlichen Ansteuerung (Tastgrad entspricht 100%) erhöht, um im Anschluss die Sekundärphase zu starten. Das Sonderanlaufverfahren kann zudem in Abhängigkeit des Fahrzeugfahrzustandes aktiviert, deaktiviert oder modifiziert werden.

Systeme gemäß dem Stand der Technik erfüllen die aktuellen Anforderungen an die Begrenzung von Spitzenströmen, besonders in Abhängigkeit der von der Spannungsquelle bereitgestellten Ladungsmenge sowie der maximalen Steigung der Stromflanken nicht mehr. Eine Erhöhung der PWM-Ansteuerfrequenz ist nicht beliebig möglich, da eine Veränderung des Tastgrades durch die Regelungssoftware aufgrund der hohen Rechenauslastung des Mikrocontrollers dazu führt, dass während dieser Zeit nahezu keine weiteren Funktionen ausgeführt werden können. Dies kollidiert mit einer wachsenden Anzahl an Bremsassistenzfunktionen, welche zunehmend Ressourcen in Anspruch nehmen. Es kann zudem nicht beliebig schnell mit der Hardwarelogik der Elektromotoransteuerung kommuniziert werden. Die Kommunikationsschnittstelle, beispielsweise SPI, zwischen dem Mikrocontroller auf welchem die Regelsoftware implementiert ist und der Ansteuerhardware des Elektromotors stellt für bestehende Systeme einen limitierenden Faktor dar.

Werden beispielsweise Kommandos der Software zur Änderung des Tastgrades im 1ms-Raster abgesetzt - üblich sind derzeit sogar nur 10ms - reicht dies beim Einschalten des Elektromotors für eine Begrenzung der Spitzenströme und Stromflanken nicht aus, um die aktuellen Anforderungen für die Vermeidung von Fehlfunktionen umzusetzen, da die Stromanstiegsflanke in einem Zeitbereich von kleiner 1ms stattfindet. Auch die Stromflanke beim Ausschalten des Elektromotors kann Störungen der elektronischen Komponenten im Fahrzeug hervorrufen die gemäß den Anforderungen vermieden werden müssen.

Die Aufgabe der Erfindung ist es daher, eine Begrenzung gemäß der aktuellen Anforderungen an elektrische Kraftfahrzeugkomponenten bezüglich der Spitzenströme, besonders in Abhängigkeit der von einer Spannungsquelle bereitgestellten Ladungsmenge, sowie der maximalen Steigung der Stromflanken des Elektromotors eines elektrohydraulischen Kraftfahrzeugbremssystems zu realisieren, wobei Einschränkungen der Bremssystemfunktionen aufgrund eines ungenügend schnellen Anlaufs des Elektromotors vermieden und der Kostendruck bei der Konstruktion von Fahrzeugkomponenten berücksichtigt werden muss.

Diese Aufgabe wird durch das erfindungsgemäße Verfahren gemäß Anspruch 1 sowie die elektronische Schaltungsanordnung gemäß Anspruch 15 gelöst.

Das Verfahren zur Begrenzung von Spitzenströmen, insbesondere in Abhängigkeit der von einer Spannungsquelle bereitgestellten Ladungsmenge, sowie der maximalen Steigung der Stromflanken eines mittels Pulsweitenmodulation (PWM) angesteuerten Elektromotors eines elektrohydraulischen Kraftfahrzeugbremssystems, insbesondere eines Pumpenmotors, wobei eine Änderung eines Ist-Tastgrades der PWM von einem ersten Tastgrad der PWM auf einen zweiten Tastgrad zur Laufzeit vorgenommen wird, zeichnet sich dadurch aus, dass die Änderung nach Maßgabe eines zur Laufzeit berechneten und/oder änderbaren positiven oder negativen Steigungswertes erfolgt, wobei die Änderung besonders bevorzugt durch eine Hardwarelogik eines Hardwaremoduls, welches den Elektromotor ansteuert, ausgeführt wird.

Der Vorteil ist, dass die aktuellen Anforderungen an die Begrenzungen eingehalten werden können. Im Vergleich zum Stand der Technik ergibt sich weiterhin eine geringere Auslastung des Mikrocontrollers auf welchem die Regelsoftware des Bremssystems implementiert ist sowie der Kommunikationsschnittstelle zwischen dem Mikrocontroller und der Hardwarelogik der Elektromotoransteuerung. In Kombination mit entsprechenden Filternetzwerken können die Belastung auf das Fahrzeugbordnetz, hervorgerufen insbesondere durch Aktivieren oder Deaktivieren der Pumpe, gegenüber Systemen gemäß dem Stand der Technik deutlich vermindert werden.

Gemäß einer weiteren bevorzugten Ausführungsform wird die Änderung des Ist-Tastgrades unter Heranziehung des in einem ersten durch das Hardwaremodul umfassten Logikregister gespeicherten Steigungswertes vorgenommen und der Ist-Tastgrad an den in einem zweiten durch das Hardwaremodul umfassten Logikregister gespeicherten Soll-Tastgrad angenähert.

Vorteilhafterweise wird dadurch eine im Wesentlichen autarke Änderung des PWM-Tastgrades durch die Ansteuerhardware des Elektromotors ermöglicht, ohne Ressourcen des Mikrocontrollers sowie der Kommunikationsschnittstelle zu benötigen.

Gemäß einer ersten bevorzugten Ausführungsform wird zur Änderung des Ist-Tastgrades der PWM der Ist-Tastgrad um den Steigungswert inkrementiert oder dekrementiert, wobei die Änderung insbesondere in jeder Periode der PWM durchgeführt wird. Bevorzugt wird die Änderung des Ist-Tastgrades in Bits in Abhängigkeit der Bitwertigkeit pro Periode der PWM vorgenommen.

Im Vergleich zum Stand der Technik, bei dem wie weiter oben beschrieben eine softwareseitige Änderung des Tastgrades alle 1 bis 10ms durchgeführt wird, kann durch die Erfindung vorteilhafterweise eine Änderung des Tastgrades in Abhängigkeit der PWM-Frequenz im Bereich von wesentlich kleiner als 1ms und damit im Bereich des Stromanstiegs ausgeführt werden. Durch die bitwertige Änderung kann vorteilhafterweise das Inkrementieren oder Dekrementieren in weiten, änderbaren Größenordnungen vorgenommen werden.

Besonders bevorzugt erfolgt das Speichern des Soll-Tastgrades und/oder des Steigungswertes in das oder die vom Hardwaremodul umfassten Logikregister durch ein Berechnungsprogramm, welches insbesondere eine Regelungssoftware des Kraftfahrzeugbremssystems ist.

Die Regelungssoftware des Kraftfahrzeugbremssystems kann die Vorgabewerte vorteilhafterweise mit einer geringeren Frequenz ausgeben, als es für die Änderungen des PWM-Tastgrades zum Erreichen der Anforderungen notwendig ist, da der wesentliche Teil, nämlich die Möglichkeit der Darstellung einer Rampenfunktion, durch die Hardware weitgehend autark ermöglicht wird. Durch diese Ressourceneinsparung können insbesondere während des Motoranlaufs weitere Regelaufgaben durch den Mikrocontroller ausgeführt werden.

Gemäß einer weiteren bevorzugten Ausführungsform ist ein erster Tastgrad-Schwellwert der PWM vorhanden, welcher nur bei Aktivierung und/oder Deaktivierung der PWM herangezogen wird und welcher insbesondere derart gestaltet ist, dass der Ist-Tastgrad bei Aktivierung der PWM von 0% auf den ersten Tastgrad-Schwellwert und/oder bei Deaktivierung der PWM vom ersten Tastgrad-Schwellwert auf 0% springt. Bevorzugt wird der erste Tastgrad-Schwellwert bei Aktivierung der PWM als Wert für den ersten Tastgrad und/oder bei Deaktivierung der PWM als Wert für den zweiten Tastgrad herangezogen.

Der Vorteil ist, dass die Zeit von der Aktivierung bis insbesondere zur Vollaussteuerung sowie von einem gegebenen Ist-Tastgrad bis zur Deaktivierung zusätzlich angepasst (beschleunigt) werden kann, wenn der Steigungswert als gegeben betrachtet wird. Die Berechnung geschieht vorteilhafterweise unter Berücksichtigung der spezifizierten Anforderungen der Leistungsentnahme aus dem Fahrzeugbordnetz.

Besonders bevorzugt ist die Änderung des Ist-Tastgrades nach Maßgabe des Steigungswertes zur Laufzeit aktivierbar oder deaktivierbar.

Der Vorteil ist, dass beispielsweise in funktionellen Rückfallebenen des Kraftfahrzeugbremssystems oder Notfallsituationen die maximale Leistung des Elektromotors ohne Zeitverzug zur Verfügung steht.

Bevorzugt ist ein zweiter Tastgrad-Schwellwert der PWM vorhanden, welcher insbesondere derart gestaltet ist, dass Ist-Tastgrade zwischen diesem zweiten Tastgrad-Schwellwert und kontinuierlicher Ansteuerung bei Änderung des Ist-Tastgrades übersprungen werden. Der erste Tastgrad-Schwellwert und/oder der zweite Tastgrad-Schwellwert werden zudem besonders bevorzugt in Abhängigkeit der PWM-Frequenz festgelegt, wobei eine Änderung des ersten Tastgrad-Schwellwertes und/oder des zweiten Tastgrad-Schwellwertes zur Laufzeit möglich ist.

Weiterhin ist bevorzugt ein Mindestwert für den Ist-Tastgrad definiert, wobei dieser insbesondere in Abhängigkeit der PWM-Frequenz festgelegt wird und kleiner oder gleich dem ersten Tastgrad-Schwellwert ist.

Gemäß einer weiteren bevorzugten Ausführungsform des erfindungsgemäßen Verfahrens wird/werden der erste Tastgrad-Schwellwert und/oder der zweite Tastgrad-Schwellwert in mindestens einem Logikregister gespeichert und für die Bereitstellung des Ist-Tastgrades von der Hardwarelogik herangezogen.

Die elektronische Schaltungsanordnung zur Ausführung des weiter oben beschriebenen Verfahrens, wobei mit einem Berechnungsmittel, das ein Berechnungsprogramm ausführt, vorzugsweise einem Mikrocontroller, über ein Datenübertragungsmittel, insbesondere einem SPI-Bussystem, mit einem Hardwaremodul, welches einen Elektromotor eines Kraftfahrzeugbremssystems ansteuert, insbesondere einen Pumpenmotor, Daten ausgetauscht werden, wobei dieses Hardwaremodul mindestens eine Hardwarelogik und mindestens ein Logikregister umfasst, zeichnet sich dadurch aus, dass mindestens ein Logikregister, das einen Steigungswert des Tastgrades und/oder einen ersten Tastgrad-Schwellwert und/oder eine Soll-Tastgrad der PWM speichert, sowie eine Hardwarelogik, welche einen Ist-Tastgrades unter Heranziehung der Werte in dem oder den Logikregister(n) bestimmt, vorhanden ist.

Weitere bevorzugte Ausführungsformen ergeben sich aus den Unteransprüchen und der nachfolgenden Beschreibung eines Ausführungsbeispiels an Hand von Figuren.

Es zeigen:
- Fig. 1: ein Prinzipschaltbild der erfindungsgemäßen, elektronischen Schaltungsanordnung und
- Fig. 2: eine beispielhafte, erfindungsgemäße PWM-Ansteuerung eines Pumpenmotors mit Steigungswerten des PWM-Tastgrades.

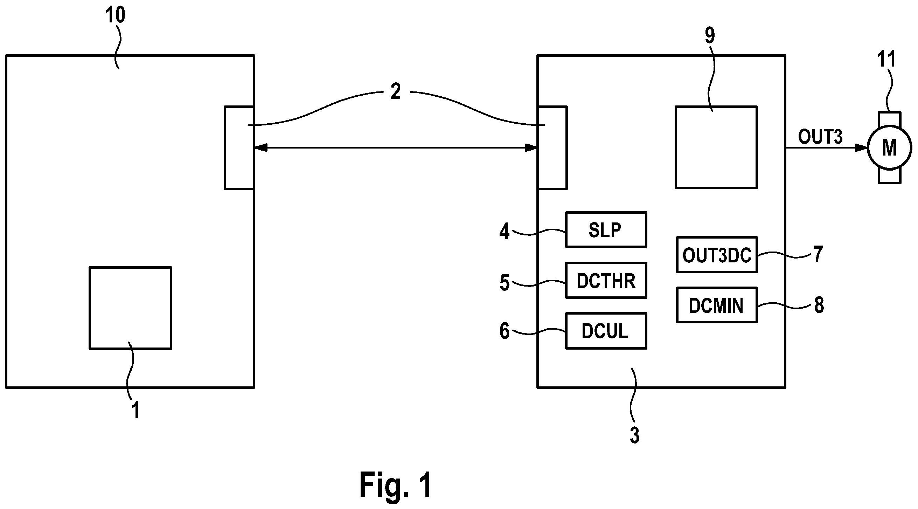

Fig. 1 zeigt ein Prinzipschaltbild der erfindungsgemäßen elektronischen Schaltungsanordnung, worin Mikrocontroller Unit (MCU) 10 und Hardwaremodul (PCU) 3 über SPI-Bussystem 2 kommunizieren. MCU 10 umfasst Mikrocontroller 1, durch den Berechnungen des Bremsenregelungssystems ausgeführt werden. Über SPI-Bussystem 2 werden die solchermaßen berechneten Werte, Soll-Tastgrad OUT3DC, Steigungswert SLP, erster Tastgrad-Schwellwert DCTHR, zweiter Tastgrad-Schwellwert DCUL und Mindestwert des Tastgrades DCMIN in Logikregister 4 bis 8 von PCU 3 gespeichert. PCU 3 nimmt die Ansteuerung für Elektromotor 11 durch Hardwarelogik 9 vor, welche auf Logikregister 4 bis 8 zugreift. Der Elektromotor wird in an sich bekannter Weise mittels Feldeffekttransistor angesteuert, welcher wiederum an seinem Gate durch Hardwarelogik 9 angesteuert wird, was nicht explizit abgebildet ist.

Die in Fig. 1 gezeigte Schaltungsanordnung zeigt eine bevorzugte Ausführungsform der Erfindung. Die Unterbringung von Mikrocontroller 1 in PCU 3 ist daher gemäß einer alternativ bevorzugten Ausführungsform ebenso möglich.

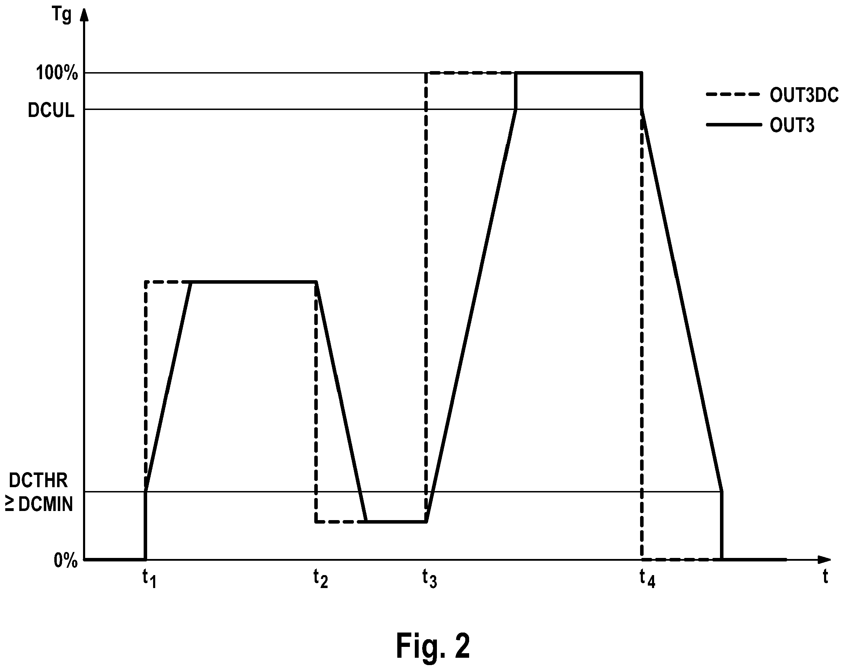

Fig. 2 stellt eine beispielsgemäße PWM-Ansteuerung eines Pumpenmotors eines elektromechanischen Bremssystems dar, für welchen das erfindungsgemäße Verfahren zur Begrenzung von Spitzenströmen sowie der maximalen Steigung der Stromflanken eingesetzt wird. Abgebildet ist der Zeitverlauf von Ist-Tastgrad OUT3 und Soll-Tastgrad OUT3DC der PWM-Ansteuerung gemäß Fig. 1. Auf der Abszisse ist Zeit t und auf der Ordinate Tastgrad Tg aufgetragen, wobei 0% die Deaktivierung und 100% eine kontinuierliche Betriebsart des Elektromotors der Pumpe bedeutet.

Berechnungen der Regelungssoftware des Kraftfahrzeugbremssystems werden durch Mikrocontroller 1 in MCU 10 durchgeführt. Wie in der Beschreibung zu Fig. 1 beschrieben, werden die berechneten Werte über SPI-Bussystem 2 an Hardwaremodul 3 gesendet und in Logikregistern 4 bis 8 gespeichert. Soll die Pumpe nach Maßgabe der Bremsenregelung zum Zeitpunkt t1 aktiviert werden, verwendet Hardwarelogik 9 diese Werte zur Ansteuerung des Elektromotors. Soll-Tastgrad OUT3DC in Logikregister 7 wird dabei durch Ist-Tastgrad OUT3 unter Verwendung von Steigungswert SLP in Logikregister 4 und unter Berücksichtigung von Schwellwert DCTHR in Logikregister 5 rampenförmig angenähert. Durch diese Partitionierung der Regelungsaufgabe in einen Software- und Hardware-Teil können Ressourcen von Mikroprozessor und SPI-Bussystem eingespart werden, wobei die situationsabhängige Entscheidung, wie die Pumpe anzusteuern ist, durch die Regelungssoftware und die Ansteuerung selbst weitgehend autark durch die Hardwarelogik vorgenommen wird. Geht man von einer 18kHz PWM-Frequenz aus, kann auf diese Weise eine Änderung von Ist-Tastgrad Out3 entsprechend der Taktperiode alle 55 µs vorgenommen werden.

Nach der Aktivierung erfolgt ein Sprung von Ist-Tastgrad OUT3 auf Schwellwert DCTHR, von dem aus Ist-Tastgrad OUT3 entsprechend Steigungswert SLP auf Soll-Tastgrad OUT3DC rampenförmig erhöht wird. Schwellwert DCTHR wird nur bei der Aktivierung und Deaktivierung wirksam, wobei zusätzlich Mindestwert DCMIN in Logikregister 8 vorgegeben werden kann, der kleiner oder gleich Schwellwert DCTHR ist und über den gesamten Aktivierungszeitraum der PWM berücksichtigt wird. Die Vorgabe von Mindestwert DCMIN resultiert aus einer Überstromüberwachung des Pumpen-FETs.

Der Bereich von 0...100% Tastgrad wird durch einen Wertebereich von 0...256 Bits mit Berücksichtigung der Bitwertigkeit (LSB) repräsentiert, wobei sich Steigungswert SLP als Änderung des Tastgrades in LSB pro Periode der PWM ausdrückt.

Durch die Regelung werden beispielsweise die berechneten Werte für Soll-Tastgrad Out3DC von 192 LSB, Tastgrad-Schwellwert DCTHR von 64 LSB und Steigungswert SLP von 2 LSB pro PWM-Periode für die Aktivierung der Pumpe vorgegeben und in entsprechenden Logikregistern 4,5,7 gespeichert. Elektromotor 11 würde entsprechend mit 25% Ist-Tastgrad OUT3 der PWM aktiviert und Ist-Tastgrad OUT3 dann jeweils in Inkrementen von 2 der 8 Bit Quantisierung (0...256 LSB) pro PWM Periode durch Hardwarelogik 9 erhöht, bis eine Ansteuerung mit 75% erreicht ist.

Wird Steigungswert SLP beispielsweise durch ein 10 Bit Wort repräsentiert, ist durch Wahl der Definition das Inkrementieren und Dekrementieren um Bruchteile von LSB pro PWM-Periode möglich, indem zum Beispiel 4 LSB Nachkommastellen und 6 LSB vor dem Komma festgelegt werden. Alternativ kann in Logikregister 4 gespeicherter Steigungswert SLP mit einem konstanten oder variablen Faktor multipliziert werden. Erfolgt beispielsweise eine Multiplikation mit 1/16, so wird jede 16. PWM-Periode ein LSB von Ist-Tastgrad OUT3 inkrementiert oder dekrementiert.

In Logikregister 7 ist ein Bit vorgesehen, mit Hilfe dessen eine Aktivierung oder Deaktivierung des rampenförmigen Sanftanlaufs des Elektromotors ein- oder ausgeschaltet werden kann. Dadurch wird ermöglicht, in bestimmten Situationen die maximal, verfügbare Leistung der Pumpe ohne Zeitverzug zu erhalten.

Erfolgt zum Zeitpunkt t2 eine durch die Regelung ausgelöste Änderung (jedoch nicht Deaktivierung) von Soll-Tastgrad OUT3DC, wird Ist-Tastgrad OUT3 bis zum Erreichen von Soll-Tastgrad OUT3DC entsprechend dem im Logikregister 4 gespeichertem Steigungswert SLP dekrementiert. Ist-Tastgrad OUT3 unterschreitet zwischen t2 und t3 den während der Aktivierungszeit nicht zu berücksichtigenden Schwellwert DCTHR, welcher aber dennoch größer oder gleich dem Mindestwert DCMIN ist. Zum Zeitpunkt t3 wird durch Änderung von Soll-Tastgrad OUT3DC auf 100% ein kontinuierlicher Pumpenbetrieb angefordert und Ist-Tastgrad OUT3 gemäß Steigungswert SLP rampenförmig inkrementiert. Bei Erreichen eines Tastgrades, welcher dem zweiten Schwellwert DCUL in Logikregister 6 entspricht, erfolgt ein Sprung auf 100% Ist-Tastgrad OUT3, wobei keine weitere rampenförmige Erhöhung erfolgt. Gibt die Regelungssoftware einen Soll-Tastgrad OUT3DC vor, der größer ist als Schwellwert DCUL, jedoch geringer als 100%, so wird Ist-Tastgrad OUT3 auf Schwellwert DCUL begrenzt.

Wird durch die Regelung zum Zeitpunkt t4 die Deaktivierung der Pumpe aus dem kontinuierlichen Betrieb heraus ausgelöst, erfolgt zunächst ein Sprung von Ist-Tastgrad Out3 auf Schwellwert DCUL. Im Anschluss wird der Tastgrad rampenförmig bis Schwellwert DCTHR reduziert und ausgehend von diesem mit einem weiteren Sprung auf 0% Ist-Tastgrad OUT3, die PWM deaktiviert. Schwellwert DCUL wird auch in dem Fall berücksichtigt, wenn keine Deaktivierung, sondern nur eine Änderung auf einen niedrigeren Ist-Tastgrad OUT3 vorgenommen wird. Wird beispielsweise während oder vor Beginn der Laufzeit der PWM, das Bit zur De-/Aktivierung der Rampenfunktionalität entsprechend geändert, kann ein sofortiges De-/Aktivieren erwirkt werden.

Damit zeitliche Verzögerungen der gewünschten Pumpenleistung weitestgehend vermieden werden um damit keine Einschränkungen der Leistung des Bremssystems zu erhalten, ist es notwendig den Steigungswert unter zusätzlicher Betrachtung der Einhaltung der Anforderungen hinsichtlich der maximalen Steigung der Stromflanken und Stromspitzenwerte zu optimieren. Die Werte in Logikregistern 4 bis 8 können zur Laufzeit von der Regelungssoftware geändert werden, womit sich die Möglichkeit ergibt, während des Sanftanlaufs bzw. der Deaktivierung, beispielsweise Steigungswert SLP alle 5ms zu ändern, um damit einen polygonzugartigen Anstiegs- bzw. Abfallverlauf zu erzeugen. Die Hardwarelogik verwendet dann ab dem Abschluss des Schreibzugriffes den neuen Steigungswert SLP für folgende Ist-Tastgrade OUT3.

## Patentansprüche

1. Verfahren zur Begrenzung von Spitzenströmen, insbesondere in Abhängigkeit der von einer Spannungsquelle bereitgestellten Ladungsmenge, sowie der maximalen Steigung der Stromflanken eines mittels Pulsweitenmodulation (PWM) angesteuerten Elektromotors (11) eines elektrohydraulischen Kraftfahrzeugbremssystems, insbesondere eines Pumpenmotors, wobei eine Änderung eines Ist-Tastgrades (OUT3) der PWM von einem ersten Tastgrad der PWM auf einen zweiten Tastgrad zur Laufzeit vorgenommen wird, **dadurch gekennzeichnet, dass** die Änderung nach Maßgabe eines zur Laufzeit berechneten und/oder änderbaren positiven oder negativen Steigungswertes (SLP) erfolgt.

2. Verfahren nach Anspruch 1, **dadurch gekennzeichnet, dass** die Änderung durch eine Hardwarelogik (9) eines Hardwaremoduls (3), welches den Elektromotor (11) ansteuert, ausgeführt wird.

3. Verfahren nach einem der Ansprüche 1 oder 2, **dadurch gekennzeichnet, dass** die Änderung des Ist-Tastgrades (OUT3) unter Heranziehung des in einem ersten durch das Hardwaremodul (9) umfassten Logikregister (4) gespeicherten Steigungswertes (SLP) vorgenommen wird und der Ist-Tastgrad (OUT3) an den in einem zweiten durch das Hardwaremodul (9) umfassten Logikregister gespeicherten Soll-Tastgrad (OUT3DC) angenähert wird.

4. Verfahren nach mindestens einem der Ansprüche 1 bis 3, **dadurch gekennzeichnet, dass** zur Änderung des Ist-Tastgrades (OUT3) der PWM, der Ist-Tastgrad (OUT3) um den Steigungswert (SLP) inkrementiert oder dekrementiert wird, wobei die Änderung insbesondere in jeder Periode der PWM durchgeführt wird.

5. Verfahren nach mindestens einem der Ansprüche 2 bis 4, **dadurch gekennzeichnet, dass** das Speichern des Soll-Tastgrades (OUT3DC) und/oder des Steigungswertes (SLP) in das oder die vom Hardwaremodul (9) umfassten Logikregister (4,7) durch ein Berechnungsprogramm erfolgt, welches insbesondere eine Regelungssoftware des Kraftfahrzeugbremssystems ist.

6. Verfahren nach mindestens einem der Ansprüche 1 bis 5, **dadurch gekennzeichnet, dass** ein erster Tastgrad-Schwellwert (DCTHR) der PWM vorhanden ist, welcher nur bei Aktivierung und/oder Deaktivierung der PWM herangezogen wird, und welcher insbesondere derart gestaltet ist, dass der Ist-Tastgrad (OUT3) bei Aktivierung der PWM von 0% auf den ersten Tastgrad-Schwellwert (DCTHR) und/oder beim Deaktivieren der PWM vom ersten Tastgrad-Schwellwert (DCTHR) auf 0% springt.

7. Verfahren nach Anspruch 6, **dadurch gekennzeichnet, dass** der erste Tastgrad-Schwellwert (DCTHR) bei Aktivierung der PWM als Wert für den ersten Tastgrad und/oder bei Deaktivierung der PWM als Wert für den zweiten Tastgrad herangezogen wird.

8. Verfahren nach mindestens einem der Ansprüche 1 bis 7, **dadurch gekennzeichnet, dass** die Änderung des Ist-Tastgrades (OUT3) nach Maßgabe des Steigungswertes (SLP) zur Laufzeit aktivierbar oder deaktivierbar ist.

9. Verfahren nach mindestens einem der Ansprüche 1 bis 8, **dadurch gekennzeichnet, dass** ein zweiter Tastgrad-Schwellwert (DCUL) der PWM vorhanden ist und welcher insbesondere derart gestaltet ist, dass Ist-Tastgrade (OUT3) zwischen diesem zweiten Tastgrad-Schwellwert (DCUL) und kontinuierlicher Ansteuerung bei Änderung des Ist-Tastgrades (OUT3) übersprungen werden.

10. Verfahren nach mindestens einem der Ansprüche 1 bis 9, **dadurch gekennzeichnet, dass** der erste Tastgrad-Schwellwert (DCTHR) und/oder der zweite Tastgrad-Schwellwert (DCUL) in Abhängigkeit der PWM-Frequenz festgelegt werden.

11. Verfahren nach mindestens einem der Ansprüche 1 bis 10, **dadurch gekennzeichnet, dass** ein Mindestwert (DCMIN) für den Ist-Tastgrad (Out3) definiert ist, wobei dieser insbesondere in Abhängigkeit der PWM-Frequenz festgelegt wird und kleiner oder gleich dem ersten Tastgrad-Schwellwert (DCTHR) ist.

12. Verfahren nach mindestens einem der Ansprüche 1 bis 11, **dadurch gekennzeichnet, dass** die Änderung des Ist-Tastgrades (OUT3) in Bits in Abhängigkeit der Bitwertigkeit pro Periode der PWM vorgenommen wird.

13. Verfahren nach mindestens einem der Ansprüche 9 bis 12, **dadurch gekennzeichnet, dass** eine Änderung des ersten Tastgrad-Schwellwertes (DCTHR) und/oder des zweiten Tastgrad-Schwellwertes (DCUL) zur Laufzeit möglich ist.

14. Verfahren nach mindestens einem der Ansprüche 9 bis 13, **dadurch gekennzeichnet, dass** der erste Tastgrad-Schwellwert (DCTHR) und/oder der zweite Tastgrad-Schwellwert (DCUL) in mindestens einem Logikregister (5,6) gespeichert und für die Bereitstellung des Ist-Tastgrades (OUT3) von der Hardwarelogik (9) herangezogen wird/werden.

15. Elektronische Schaltungsanordnung zur Ausführung eines Verfahrens nach mindestens einem der Ansprüche 1 bis 14, wobei mit einem Berechnungsmittel (1), das ein Berechnungsprogramm ausführt, insbesondere einem Mikrocontroller, über ein Datenübertragungsmittel (2), insbesondere einem SPI-Bussystem, mit einem Hardwaremodul (3), welches einen Elektromotor eines Kraftfahrzeugbremssystems ansteuert, insbesondere einen Pumpenmotor, Daten ausgetauscht werden, wobei dieses Hardwaremodul (3) mindestens eine Hardwarelogik (9) und mindestens ein Logikregister (4,5,6,7,8) umfasst, **dadurch gekennzeichnet, dass** mindestens ein Logikregister vorhanden ist, das einen Steigungswert (SLP) des Tastgrades und/oder einen ersten Tastgrad-Schwellwert (DCTHR) und/oder eine Soll-Tastgrad (OUT3DC) der PWM speichert und die Hardwarelogik (9) einen Ist-Tastgrad (OUT3) zur Ansteuerung des Elektromotors (11) unter Heranziehung der Werte in dem oder den Logikregister (n) (4...8) bestimmt.

## Claims

1. Method for limiting peak currents, particularly on the basis of the charge quantity provided by a voltage source, and also the maximum slope of the current edges of an electric motor (11), actuated by means of pulse width modulation (PWM), in an electrohydraulic motor vehicle brake system, particularly a pump motor, wherein an actual duty cycle (OUT3) of the PWM is changed from a first duty cycle of the PWM to a second duty cycle at execution time, **characterized in that** the change is made in accordance with a positive or negative slope value (SLP) that is calculated and/or can be changed at execution time.

2. Method according to Claim 1, **characterized in that** the change is executed by a hardware logic unit (9) of a hardware module (3) that actuates the electric motor (11).

3. Method according to either of Claims 1 and 2, **characterized in that** the actual duty cycle (OUT3) is changed by using the slope value (SLP) stored in a first logic register (4) that the hardware module (9) comprises, and the actual duty cycle (OUT3) is approximated to the setpoint duty cycle (OUT3DC) stored in a second logic register that the hardware module (9) comprises.

4. Method according to at least one of Claims 1 to 3, **characterized in that** in order to change the actual duty cycle (OUT3) of the PWM, the actual duty cycle (OUT3) is incremented or decremented by the slope value (SLP), with the change being made particularly in each period of the PWM.

5. Method according to at least one of Claims 2 to 4, **characterized in that** the setpoint duty cycle (OUT3DC) and/or the slope value (SLP) is/are stored in the logic register(s) (4,7) that the hardware module (9) comprises by a computation program, which is particularly a piece of control software for the motor vehicle brake system.

6. Method according to at least one of Claims 1 to 5, **characterized in that** a first duty cycle threshold value (DCTHR) of the PWM is existent that is used only when the PWM is activated and/or deactivated, and that is designed particularly such that the actual duty cycle (OUT3) jumps from 0% to the first duty cycle threshold value (DCTHR) when the PWM is activated and/or from the first duty cycle threshold value (DCTHR) to 0% when the PWM is deactivated.

7. Method according to Claim 6, **characterized in that** the first duty cycle threshold value (DCTHR) is used as a value for the first duty cycle when the PWM is activated and/or as a value for the second duty cycle when the PWM is deactivated.

8. Method according to at least one of Claims 1 to 7, **characterized in that** the change in the actual duty cycle (OUT3) can be activated or deactivated in accordance with the slope value (SLP) at execution time.

9. Method according to at least one of Claims 1 to 8, **characterized in that** a second duty cycle threshold value (DCUL) of the PWM is existent that is designed particularly such that actual duty cycles (OUT3) between this second duty cycle threshold value (DCUL) and continuous actuation are skipped when the actual duty cycle (OUT3) is changed.

10. Method according to at least one of Claims 1 to 9, **characterized in that** the first duty cycle threshold value (DCTHR) and/or the second duty cycle threshold value (DCUL) are stipulated on the basis of the PWM frequency.

11. Method according to at least one of Claims 1 to 10, **characterized in that** a minimum value (DCMIN) is defined for the actual duty cycle (Out3), said minimum value being stipulated particularly on the basis of the PWM frequency and being less than or equal to the first duty cycle threshold value (DCTHR).

12. Method according to at least one of Claims 1 to 11, **characterized in that** the actual duty cycle (OUT3) in bits is changed on the basis of the bit significance per period of the PWM.

13. Method according to at least one of Claims 9 to 12, **characterized in that** it is possible for the first duty cycle threshold value (DCTHR) and/or the second duty cycle threshold value (DCUL) to be changed at execution time.

14. Method according to at least one of Claims 9 to 13, **characterized in that** the first duty cycle threshold value (DCTHR) and/or the second duty cycle threshold value (DCUL) is/are stored in at least one logic register (5, 6) and used for the provision of the actual duty cycle (OUT3) by the hardware logic unit (9).

15. Electronic circuit arrangement for performing a method according to at least one of Claims 1 to 14, wherein data are interchanged with a computation means (1) that executes a computation program, particularly a microcontroller, via a data transmission means (2), particularly an SPI bus system, with a hardware module (3) that actuates an electric motor in a motor vehicle brake system, particularly a pump motor, wherein this hardware module (3) comprises at least one hardware logic unit (9) and at least one logic register (4, 5, 6, 7, 8), **characterized in that** at least one logic register is existent that stores a slope value (SLP) of the duty cycle and/or a first duty cycle threshold value (DCTHR) and/or a setpoint duty cycle (OUT3DC) of the PWM, and the hardware logic unit (9) determines an actual duty cycle (OUT3) for actuating the electric motor (11) by using the values in the logic register(s) (4...8).

## Revendications

1. Procédé de limitation des courants de pointe, notamment en fonction d'une quantité de charge fournie par une source de tension, ainsi que de la pente maximale des flancs de courant d'un moteur électrique (11), commandé par modulation d'impulsions en largeur (PWM), d'un système de freinage électro-hydraulique de véhicule automobile, notamment d'un moteur de pompe, une modification d'un rapport cyclique réel (OUT3) de la PWM d'un premier rapport cyclique de la PWM en un deuxième rapport cyclique étant effectuée pour obtenir un temps de marche, **caractérisé en ce que** la modification est effectuée d'après l'indication d'une valeur de flanc (SLP) positive ou négative calculée et/ou modifiable en vue d'obtenir le temps de marche.

2. Procédé selon la revendication 1, **caractérisé en ce que** la modification est réalisée par une logique matérielle (9) d'un module matériel (3) qui commande le moteur électrique (11).

3. Procédé selon l'une des revendications 1 ou 2, **caractérisé en ce que** la modification du rapport cyclique réel (OUT3) est effectuée en utilisant une valeur de pente (SLP) enregistrée dans un premier registre logique (4) compris dans le module matériel (9) et le rapport cyclique réel (OUT3) est rapproché du rapport cyclique de consigne (OUT3DC) enregistré dans un deuxième registre logique compris dans le module matériel (9).

4. Procédé selon au moins l'une des revendications 1 à 3, **caractérisé en ce que** pour modifier le rapport cyclique réel (OUT3) de la PWM, le rapport cyclique réel (OUT3) est incrémenté ou décrémenté de la valeur de pente (SLP), la modification étant notamment effectuée dans chaque période de la PWM.

5. Procédé selon au moins l'une des revendications 2 à 4, **caractérisé en ce que** l'enregistrement du rapport cyclique de consigne (OUT3DC) et/ou de la valeur de pente (SLP) dans le ou les registres logiques (4, 7) compris dans le module matériel (9) est effectué par un programme de calcul qui est notamment un logiciel de régulation du système de freinage de véhicule automobile.

6. Procédé selon au moins l'une des revendications 1 à 5, **caractérisé en ce qu'**il existe une première valeur de seuil de rapport cyclique (DCTHR) de la PWM, laquelle n'est utilisée que lors de l'activation et/ou de la désactivation de la PWM et laquelle est notamment configurée de telle sorte que le rapport cyclique réel (OUT3), lors de l'activation de la PWM, saute de 0 % à la première valeur de seuil de rapport cyclique (DCTHR) et/ou, lors de la désactivation de la PWM, de la première valeur de seuil de rapport cyclique (DCTHR) à 0 %.

7. Procédé selon la revendication 6, **caractérisé en ce que** la première valeur de seuil de rapport cyclique (DCTHR) est utilisée lors de l'activation de la PWM comme valeur pour le premier rapport cyclique et/ou lors de la désactivation de la PWM comme valeur pour le deuxième rapport cyclique.

8. Procédé selon au moins l'une des revendications 1 à 7, **caractérisé en ce que** la modification du rapport cyclique réel (OUT3) peut être activée ou désactivée en fonction de l'indication de la valeur de pente (SLP) en vue d'obtenir le temps de marche.

9. Procédé selon au moins l'une des revendications 1 à 8, **caractérisé en ce qu'**il existe une deuxième valeur de seuil de rapport cyclique (DCUL) de la PWM, laquelle est notamment configurée de telle sorte que les rapports cycliques réels (OUT3) entre cette deuxième valeur de seuil de rapport cyclique (DCUL) et la commande en continu sont sautés lors de la modification du rapport cyclique réel (OUT3).

10. Procédé selon au moins l'une des revendications 1 à 9, **caractérisé en ce que** la première valeur de seuil de rapport cyclique (DCTHR) et/ou la deuxième valeur de seuil de rapport cyclique (DCUL) sont fixées en fonction de la fréquence de PWM.

11. Procédé selon au moins l'une des revendications 1 à 10, **caractérisé en ce qu'**une valeur minimale (DCMIN) est définie pour le rapport cyclique réel (OUT3), celle-ci étant notamment fixée en fonction de la fréquence de PWM et étant inférieure ou égale à la première valeur de seuil de rapport cyclique (DCTHR).

12. Procédé selon au moins l'une des revendications 1 à 11, **caractérisé en ce que** la modification du rapport cyclique réel (OUT3) est effectuée en bits en fonction de la valeur des bits par période de la PWM.

13. Procédé selon au moins l'une des revendications 9 à 12, **caractérisé en ce qu'**une modification de la première valeur de seuil de rapport cyclique (DCTHR) et/ou de la deuxième valeur de seuil de rapport cyclique (DCUL) en vue d'obtenir le temps de marche est possible.

14. Procédé selon au moins l'une des revendications 9 à 13, **caractérisé en ce que** la première valeur de seuil de rapport cyclique (DCTHR) et/ou la deuxième valeur de seuil de rapport cyclique (DCUL) sont enregistrées dans au moins un registre logique (5, 6) et sont utilisées par la logique matérielle (9) pour la fourniture du rapport cyclique réel (OUT3).

15. Arrangement de circuit électronique destiné à mettre en oeuvre un procédé selon au moins l'une des revendications 1 à 14, des données étant échangées avec un moyen de calcul (1), lequel exécute un programme de calcul, notamment un microcontrôleur, par le biais d'un moyen de transmission de données (2), notamment un système de bus SPI, avec un module matériel (3), lequel commande un moteur électrique d'un système de freinage de véhicule automobile, notamment d'un moteur de pompe, ce module matériel (3) comprenant au moins une logique matérielle (9) et au moins un registre logique (4, 5, 6, 7, 8), **caractérisé en ce qu'**il existe au moins un registre logique qui enregistre une valeur de pente (SLP) du rapport cyclique et/ou une première valeur de seuil de rapport cyclique (DCTHR) et/ou un rapport cyclique de consigne (OUT3DC) de la PWM et la logique matérielle (9) détermine un rapport cyclique réel (OUT3) en vue de commander le moteur électrique (11) en utilisant les valeurs dans le ou les registres logiques (4 ... 8).
